(19) Europäisches Patentamt
European Patent Office
Office européen des brevets

(11) **EP 4 375 457 A1**

(12) **EUROPÄISCHE PATENTANMELDUNG**

(43) Veröffentlichungstag:
**29.05.2024   Patentblatt 2024/22**

(21) Anmeldenummer: **23211614.5**

(22) Anmeldetag: **22.11.2023**

(51) Internationale Patentklassifikation (IPC):
**E05B 17/00** (2006.01)   **B60L 53/31** (2019.01)
**E05B 63/00** (2006.01)   **E05B 65/00** (2006.01)
**E05C 9/02** (2006.01)   **E05C 9/16** (2006.01)
**E05C 9/18** (2006.01)

(52) Gemeinsame Patentklassifikation (CPC):
**E05C 9/02; B60L 53/305; B60L 53/31;**
**E05B 17/0025; E05B 63/0052; E05B 65/001;**
**E05C 9/16; E05C 9/1875**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **24.11.2022   DE 102022131176**

(71) Anmelder: **ads-tec Energy GmbH**
**72622 Nürtingen (DE)**

(72) Erfinder:
• **GREIF, Andreas**
  **73235 Weilheim (DE)**
• **MOLCHANOV, Roman**
  **72654 Neckartenzlingen (DE)**

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(54) **GEHÄUSE UND LADESTATION MIT EINEM SOLCHEN GEHÄUSE**

(57)   Die Erfindung betrifft ein Gehäuse (3), insbesondere für eine Ladestation (1), mit mindestens einem Verkleidungselement (5) und einem Türelement (7), wobei
- das mindestens eine Verkleidungselement (5) eine Türverriegelung (9) mit mindestens zwei Verriegelungselementen (11) aufweist, wobei
- die mindestens zwei Verriegelungselemente (11) voneinander beabstandet und mittels jeweils eines Befestigungselements (13) um das jeweilige Befestigungselement (13) drehbar an dem mindestens einen Verkleidungselement (5) angeordnet sind, wobei
- die mindestens zwei Verrieglungselemente (11) an einem ersten Ende (15.1) des jeweiligen Verriegelungselements (11) ein Rastelement (17) aufweisen, wobei
- die mindestens zwei Verriegelungselemente (11) über mindestens ein erstes starres Kupplungselement (21.1) mechanisch miteinander verbunden sind, wobei
- die mindestens zwei Verriegelungselemente (11) jeweils zwischen einer Freigabeposition und einer Verriegelungsposition verlagerbar sind, wobei
- das Türelement (7) mindestens zwei Verriegelungsbolzen (19) aufweist, wobei
- in der Verriegelungsposition die mindestens zwei Verriegelungselemente (11) mittels des jeweiligen Rastelements (17) mit jeweils einem Verriegelungsbolzen (19) der mindestens zwei Verriegelungsbolzen (19) in Eingriff sind, sodass das Türelement (7) relativ zu dem Verkleidungselement (5) fixiert ist, und wobei

- in der Freigabeposition die mindestens zwei Verriegelungselemente (11) den jeweiligen Verriegelungsbolzen (19) freigeben, sodass das Türelement (7) relativ zu dem Verkleidungselement (5) verlagerbar ist.

EP 4 375 457 A1

Fig. 1

**Beschreibung**

Die Erfindung betrifft ein Gehäuse und eine Ladestation mit einem solchen Gehäuse.

Es sind Gehäuse, insbesondere für Schaltschränke und/oder Serverschränke bekannt, die eine in ein Türelement des Gehäuses integrierte Verriegelungsvorrichtung aufweisen. Die Verriegelungsvorrichtung greift in geschlossenem Zustand mittels mindestens eines Verriegelungselements in eine Verkleidung des Gehäuses ein, um das Türelement relativ zu der Verkleidung des Gehäuses zu fixieren. Nachteilig daran ist, dass mittels einer solchen Verriegelungsvorrichtung nur geringe Schließkräfte realisiert werden können. Weiterhin ist es nachteilig notwendig, das Türelement bei einem Verriegeln des Türelements mittels einer externen Krafteinwirkung an die Verkleidung zu drücken, um das Gehäuse dicht zu verschließen.

Der Erfindung liegt daher die Aufgabe zugrunde, ein Gehäuse und eine Ladestation mit einem solchen Gehäuse zu schaffen, wobei die genannten Nachteile zumindest teilweise behoben, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Gehäuse, insbesondere für eine Ladestation, mit mindestens einem Verkleidungselement und einem Türelement geschaffen wird. Das mindestens eine Verkleidungselement weist eine Türverriegelung mit mindestens zwei Verriegelungselementen auf. Die mindestens zwei Verriegelungselemente sind voneinander beabstandet und mittels jeweils eines Befestigungselements um das jeweilige Befestigungselement drehbar an dem mindestens einen Verkleidungselement angeordnet. Weiterhin weisen die mindestens zwei Verrieglungselemente an einem ersten Ende des jeweiligen Verriegelungselements ein Rastelement auf. Die mindestens zwei Verriegelungselemente sind über mindestens ein erstes starres Kupplungselement mechanisch miteinander verbunden.

Zusätzlich sind die mindestens zwei Verriegelungselemente jeweils zwischen einer Freigabeposition und einer Verriegelungsposition verlagerbar. Darüber hinaus weist das Türelement mindestens zwei Verriegelungsbolzen auf, wobei in der Verriegelungsposition die mindestens zwei Verriegelungselemente mittels des jeweiligen Rastelements mit jeweils einem Verriegelungsbolzen der mindestens zwei Verriegelungsbolzen in Eingriff sind, sodass das Türelement relativ zu dem Verkleidungselement fixiert ist. In der Freigabeposition geben die mindestens zwei Verriegelungselemente den jeweiligen Verriegelungsbolzen frei, sodass das Türelement relativ zu dem Verkleidungselement verlagerbar ist. Vorteilhafterweise ist es damit möglich, das Türelement mittels einer hohen Schließkraft - insbesondere mindestens 1,3 kN - zu verriegeln. Weiterhin ist es vorteilhafterweise möglich, das Türelement mittels der mindestens zwei Verriegelungselemente insbesondere dicht an das Verkleidungselement heranzuziehen und somit das Gehäuse dicht zu verschließen. Vorteilhafterweise werden zusätzlich mittels des ersten starren Kupplungselements, insbesondere vermittelt über das erste starre Kupplungselement, die mindestens zwei Verriegelungselemente gleichzeitig zwischen der Freigabeposition und der Verriegelungsposition verlagert.

Insbesondere ist damit das Türelement frei von der Verriegelungsvorrichtung und frei von den mindestens zwei Verriegelungselementen. Damit ist es vorteilhafterweise möglich, eine Anzeigevorrichtung in dem Türelement anzuordnen, wobei die Anzeigevorrichtung insbesondere einen Großteil einer Fläche des Türelements, insbesondere nahezu die gesamte Fläche des Türelements, übergreifen kann. Insbesondere kann die Anzeigevorrichtung die Fläche des Türelements bis auf schmale Randbereiche übergreifen. Insbesondere nimmt die Anzeigevorrichtung mindestens 75%, vorzugsweise mindestens 80%, vorzugsweise mindestens 85%, besonders bevorzugt mindestens 89%, der Fläche des Türelements ein. Dies wird insbesondere dadurch möglich, dass die Fertigungsvorrichtung und die mindestens zwei Verriegelungselemente sind nicht an dem Türelement vorgesehen sind.

In einer Ausgestaltung weist das Türelement einen insbesondere schlank ausgebildeten Rahmen und die Anzeigevorrichtung auf, wobei in dem Rahmen die mindestens zwei Verriegelungsbolzen angeordnet sind.

Insbesondere sind die mindestens zwei Verriegelungselemente vertikal - das heißt insbesondere in geodätischer Hochrichtung - versetzt zueinander an dem mindestens einen Verkleidungselement angeordnet.

In einer Ausgestaltung sind die mindestens zwei Verriegelungselemente derart in dem Verkleidungselement - insbesondere in zu dem Türelement hin offenen Verriegelungsaussparungen des Verkleidungselements - angeordnet, dass die mindestens zwei Verriegelungselemente - insbesondere weder in der Freigabeposition noch in der Verriegelungsposition - in Richtung des Türelements über das Verkleidungselement hinausragen. Vorteilhafterweise kann damit sichergestellt werden, dass ein Benutzer bei geöffnetem Türelement nicht an den mindestens zwei Verriegelungselementen hängen bleibt. Die Verriegelungsbolzen des Türelements werden zum Verriegeln in den Verriegelungsaussparungen aufgenommen.

In einer Ausgestaltung sind die Verriegelungsbolzen in einem Rahmen des Türelements angeordnet.

In einer Ausgestaltung weist die Türverriegelung drei Verriegelungselemente auf. Die drei Verriegelungselemente sind voneinander beabstandet und mittels jeweils eines Befestigungselements um das jeweilige Befestigungselement drehbar an dem mindestens einen Verkleidungselement angeordnet.

Gemäß einer Weiterbildung der Erfindung ist vorgesehen, dass das mindestens eine erste starre Kupplungselement jeweils mit einem zweiten, dem ersten Ende des jeweiligen Verriegelungselements gegenüberliegenden Ende des jeweiligen Verriegelungselements verbunden ist. Dabei ist jeweils ein erster Abstand zwischen dem ersten Ende des jeweiligen Verriegelungselements und dem zugeordneten Befestigungselement kleiner als ein zweiter Abstand zwischen dem zweiten Ende des jeweiligen Verriegelungselements und dem zugeordneten Befestigungselement. Vorteilhafterweise wirken damit die mindestens zwei Verriegelungselemente als Hebel, wobei eine an dem ersten starren Kupplungselement angreifende Verriegelungskraft zum Verriegeln des Türelements kleiner ist als die Schließkraft, die insbesondere an dem Rastelement anliegt.

Insbesondere gilt für die Verriegelungskraft $F_V$ die Gleichung

$$ F_V = \frac{d_1}{d_2} \cdot F_S \, , $$

wobei mit $d_1$ der erste Abstand, mit $d_2$ der zweite Abstand und mit $F_S$ die Schließkraft bezeichnet werden. Da der erste Abstand $d_1$ kleiner ist als der zweite Abstand $d_2$, gilt $d_1/d_2 < 1$ und damit ist die Verriegelungskraft $F_V$ kleiner als die Schließkraft $F_S$, insbesondere gilt $F_V < F_S$.

In einer Ausgestaltung beträgt der erste Abstand $d_1$ 82,4 mm. Zusätzlich beträgt der zweite Abstand $d_2$ 160 mm. Damit ergibt sich eine erste Übersetzung des Verriegelungselements von 82,4/160=0,515. Damit entspricht die Schließkraft $F_S$ ungefähr dem doppelten der Verriegelungskraft $F_V$.

Gemäß einer Weiterbildung der Erfindung ist vorgesehen, dass das mindestens eine Verkleidungselement zusätzlich eine Türgriffvorrichtung aufweist. Dabei sind mindestens eines der Verriegelungselemente und die Türgriffvorrichtung über mindestens ein zweites starres Kupplungselement mechanisch miteinander verbunden. Das mindestens eine erste Kupplungselement und das mindestens eine zweite Kupplungselement sind derart miteinander verbunden, dass eine Translation des mindestens einen zweiten Kupplungselements eine Translation des mindestens einen ersten Kupplungselements bewirkt. Vorteilhafterweise ist es mittels der Türgriffvorrichtung in einfacherweise möglich, die mindestens zwei Verriegelungselemente zwischen der Freigabeposition und der Verriegelungsposition zu verlagern.

In einer ersten Ausführungsform ist das zweite starre Kupplungselement unmittelbar mechanisch mit dem ihm zugeordneten mindestens einen Verriegelungselement verbunden, wobei es insbesondere an dem zweiten Ende in einem zu einem ersten Anlenkpunkt des ersten starren Kupplungselements versetzten zweiten Anlenkpunkt an dem Verriegelungselement angelenkt ist, oder in demselben ersten Anlenkpunkt wie das erste starre Kupplungselement. In einer zweiten Ausführungsform ist das zweite starre Kupplungselement mittelbar über das erste starre Kupplungselement mechanisch dem ihm zugeordneten mindestens einen Verriegelungselement verbunden, wobei es insbesondere unmittelbar mit dem ersten starren Kupplungselement mechanisch verbunden ist.

In einer Ausgestaltung weist das mindestens eine Verkleidungselement die Türgriffvorrichtung auf, und zusätzlich sind die mindestens zwei Verriegelungselemente derart ausgebildet, dass der erste Abstand kleiner ist als der zweite Abstand. Damit ist vorteilhafterweise die Verriegelungskraft, die mittels der Türgriffvorrichtung aufgebracht werden muss, um das Türelement zu verriegeln, kleiner als die Schließkraft zum Verriegeln des Türelements.

Gemäß einer Weiterbildung der Erfindung ist vorgesehen, dass die Türgriffvorrichtung einen Türgriff aufweist, wobei der Türgriff verschwenkbar in der Türgriffvorrichtung angeordnet ist. Zusätzlich ist der Türgriff derart mit dem mindestens einen zweiten Kupplungselement verbunden, dass ein Verschwenken des Türgriffs eine Translation des mindestens einen zweiten Kupplungselements bewirkt.

In einer Ausgestaltung ist das zweite starre Kupplungselement mit einem Verbindungselement der Türgriffvorrichtung verbunden, insbesondere unmittelbar an dem Verbindungselement in einem dritten Anlenkpunkt angelenkt. Weiterhin ist der Türgriff mit dem Verbindungselement verbunden, insbesondere unmittelbar starr an dem Verbindungselement in einem Befestigungspunkt befestigt. Somit ist der Türgriff insbesondere vermittelt über das Verbindungselement mit dem zweiten starren Kupplungselement verbunden. Weiterhin ist das Verbindungselement drehbar um den Befestigungspunkt an der Türgriffvorrichtung angeordnet. Insbesondere sind das Verbindungselement und der Türgriff derart starr miteinander verbunden, dass eine Verschwenkung des Türgriffs eine Drehung des Verbindungselements bewirkt.

Insbesondere ist das Verbindungselement derart ausgebildet und mit dem zweiten starren Kupplungselement einerseits und dem Türgriff andererseits verbunden, dass das Verbindungselement vorteilhafterweise als Hebel - insbesondere zusammen mit dem zweiten starren Kupplungselement als Kniehebel - wirkt, wobei die an dem zweiten starren Kupplungselement angreifende Verriegelungskraft zum Verriegeln des Türelements größer ist als eine - insbesondere manuell in den Türgriff eingeleitete - Schwenkkraft, die zum Verschwenken des Türgriffs aufgebracht wird. Dies wird im Folgenden anhand einer vereinfachten Darstellung plausibilisiert: Insbesondere gilt für die Schwenkkraft $F_G$ die Gleichung

$$ F_G = \frac{d_3}{d_4} \cdot F_V \, , $$

wobei mit $d_3$ ein dritter Abstand zwischen dem dritten Anlenkpunkt und dem Befestigungspunkt, mit $d_4$ ein vierter Abstand zwischen dem Befestigungspunkt und einer Greifposition an dem Türgriff, und mit $F_V$ die Verriegelungskraft bezeichnet werden. Da der dritte Abstand $d_3$ kleiner ist als der vierte Abstand $d_4$, gilt $d_3/d_4<1$ und damit ist die Schwenkkraft $F_G$ kleiner als die Verriegelungskraft $F_V$, insbesondere gilt $F_G<F_V$.

Insbesondere bilden das Verriegelungselement und der Verbindungselement ein mehrstufiges Getriebe aus, wobei insbesondere die auftretenden Hebelkräfte - insbesondere unter Annahme der vorhergehenden vereinfachten Darstellung - multipliziert werden. Insbesondere gilt damit für die Schwenkkraft $F_G$ die Gleichung

$$F_G = \frac{d_3}{d_4} \cdot F_V = \frac{d_3}{d_4} \cdot \frac{d_1}{d_2} \cdot F_S \,,$$

wobei $d_1/d_2<1$ und $d_3/d_4<1$ gilt und somit die Schwenkkraft kleiner ist als die Schließkraft, insbesondere $F_G<F_S$.

Insbesondere beträgt der dritte Abstand $d_3$ 32,5 mm.

Bei einem vierten Abstand $d_4$ von 120 mm ergibt sich damit die nachfolgende überschlagsmäßige Berechnung: Es ergibt sich eine zweite Übersetzung des Verbindungselements von 32,5/120 ≈ 0,3. Damit entspricht die Schwenkkraft $F_G$ ungefähr 30% der Verriegelungskraft $F_V$. Weiterhin ergibt sich für das mehrstufige Getriebe eine zweite Gesamtübersetzung des Verriegelungselements und des Verbindungselement von (32,5/120) (82,4/160) ≈ 0,3·0,5 = 0,15. Damit entspricht die Schwenkkraft $F_G$ ungefähr 15% der Schließkraft Fs. Bei einer Schließkraft $F_S$ von 1,3 kN muss somit eine Schwenkkraft $F_G$ von ungefähr nur 0,2 kN aufgebracht werden. Insbesondere wird damit die Schwenkkraft $F_G$ ungefähr um den Faktor 7 verstärkt.

Insbesondere weist das Verbindungselement - insbesondere relativ zu dem Türgriff und/oder zu dem zweiten starren Kupplungselement - kein Spiel auf. Insbesondere ist das Verbindungselement spielfrei in der Türgriffvorrichtung angeordnet.

In einer Ausgestaltung ist der Türgriff derart ausgebildet, dass der Türgriff in der Türgriffvorrichtung arretierbar ist.

Insbesondere weist die Türgriffvorrichtung zusätzlich eine Schließvorrichtung auf, wobei die Schließvorrichtung derart ausgebildet ist, dass das Gehäuse abschließbar ist, wenn sich die Verriegelungselemente in der Verriegelungsposition befinden. Damit kann vorteilhafterweise sichergestellt werden, dass das Gehäuse, insbesondere das Türelement, nicht von unbefugten Dritten geöffnet werden kann. Insbesondere ist das Gehäuse abschließbar, wenn der Türgriff in der Türgriffvorrichtung arretiert ist.

Gemäß einer Weiterbildung der Erfindung ist vorgesehen, dass der Türgriff zwischen einer Tür-Freigabeposition und einer Tür-Verriegelungsposition verlagerbar ist. Bei einem Verschwenken des Türgriffs von der Tür-Verriegelungsposition in die Tür-Freigabeposition werden die mindestens zwei Verriegelungselemente jeweils von der Verriegelungsposition in die Freigabeposition gedreht.

Insbesondere beträgt ein Schwenkwinkel des Türgriffs zwischen der Tür-Verriegelungsposition und der Tür-Freigabeposition mindestens 100°, vorzugsweise mindestens 110°, vorzugsweise mindestens 120°, vorzugsweise mindestens 130°, vorzugsweise mindestens 140°, vorzugsweise mindestens 150°, vorzugsweise mindestens 160°, besonders bevorzugt mindestens 165°, insbesondere höchstens 180°, insbesondere höchstens 175°, insbesondere höchstens 170°.

Insbesondere ist der Türgriff in der Tür-Verriegelungsposition in der Türgriffvorrichtung arretierbar.

Gemäß einer Weiterbildung der Erfindung ist vorgesehen, dass das zweite Kupplungselement derart an der Türgriffvorrichtung befestigt ist, dass ein Anlenkpunkt -insbesondere der vierte Anlenkpunkt - des zweiten Kupplungselements an der Türgriffvorrichtung in einer Über-Totpunkt-Lage angeordnet ist, wenn der Türgriff in der Tür-Verriegelungsposition angeordnet ist. Vorteilhafterweise kann damit sichergestellt werden, dass der Türgriff selbstständig und ohne eine äußere Krafteinwirkung in der Tür-Verriegelungsposition gehalten wird. Insbesondere wird der Türgriff vorteilhafterweise auf Grund der Über-Totpunkt-Lage - insbesondere durch eine elastische Türdichtung vermittelt über die Verriegelungselemente sowie die starren Kupplungselemente - in die Tür-Verriegelungsposition gedrängt, wenn mittels des Türgriffs der Anlenkpunkt - insbesondere der vierte Anlenkpunkt - über die Totpunkt-Lage verschwenkt wird.

Die Aufgabe wird auch gelöst, indem eine Ladestation mit einem erfindungsgemäßen Gehäuse oder einem Gehäuse nach einer oder mehreren der zuvor erläuterten Ausführungsformen geschaffen wird. In Zusammenhang mit der Ladestation ergeben sich insbesondere die Vorteile, die bereits in Zusammenhang mit dem Gehäuse erläutert wurden.

Insbesondere ist die Ladestation als eine Ladestation für Elektrofahrzeuge ausgebildet.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Die Erfindung wird im Folgenden anhand der Zeichnung näher erläutert. Dabei zeigen:

Fig. 1 eine schematische Darstellung eines Ausführungsbeispiels einer Ladestation mit einem Ausführungsbeispiel eines Gehäuses,

Fig. 2 eine schematische Darstellung eines Ausführungsbeispiels einer Türverriegelung,

Fig. 3 eine schematische Darstellung einer Detailansicht des Ausführungsbeispiels der Ladestation, und

Fig. 4 eine schematische Darstellung einer Detailansicht des Ausführungsbeispiels der Türverriegelung.

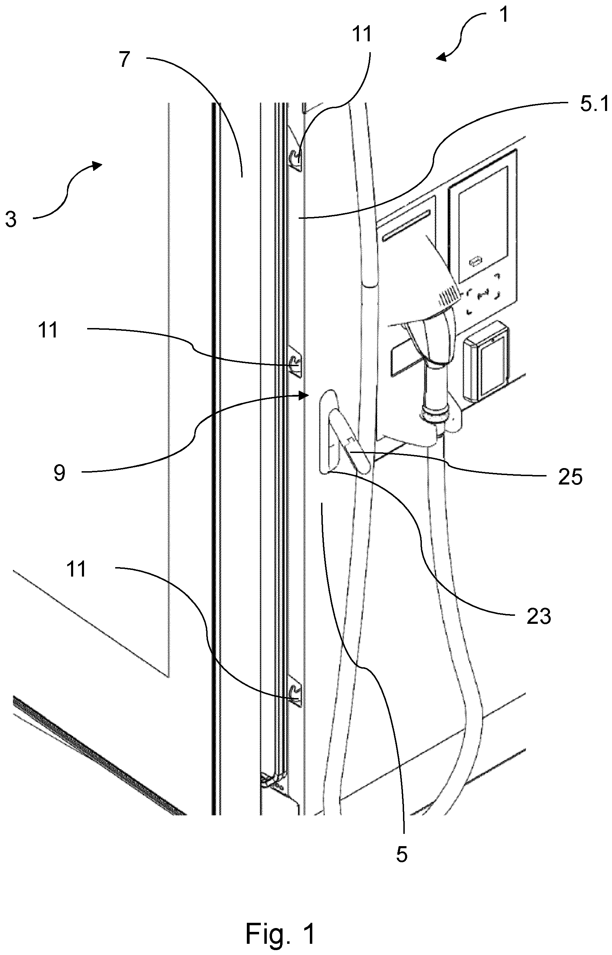

**Figur 1** zeigt eine schematische Darstellung eines Ausführungsbeispiels einer Ladestation 1 mit einem Ausführungsbeispiel eines Gehäuses 3. Die Ladestation 1 ist insbesondere als eine Ladestation 1 für Elektrofahrzeuge ausgebildet. Zusätzlich ist die Ladestation 1 insbesondere als eine batteriegestützte Ladestation, insbesondere als eine insbesondere batteriegestützte Schnellladestation, ausgebildet. Das Gehäuse 3 weist mindestens ein Verkleidungselement 5 und ein Türelement 7 auf.

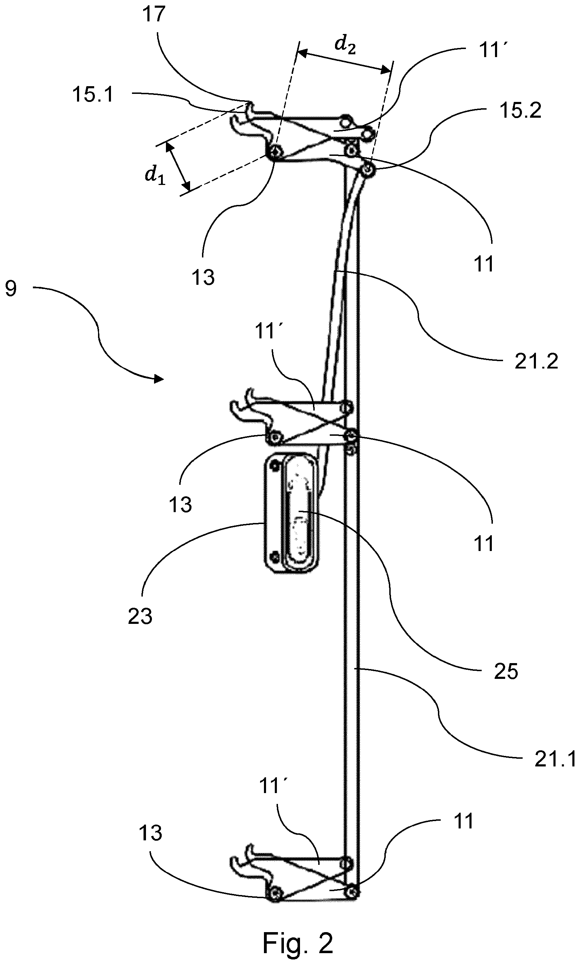

Das mindestens eine Verkleidungselement 5 weist eine Türverriegelung 9 mit mindestens zwei Verriegelungselementen 11, insbesondere mit drei Verriegelungselementen 11, auf. Die mindestens zwei Verriegelungselemente 11 sind voneinander beabstandet, insbesondere vertikal voneinander beabstandet, und mittels jeweils eines Befestigungselements 13, das in den Figuren 2 bis 4 dargestellt ist, um das jeweilige Befestigungselement 13 drehbar an dem mindestens einen Verkleidungselement 5 angeordnet. Weiterhin weisen die mindestens zwei Verrieglungselemente 11 an einem ersten Ende 15.1 des jeweiligen Verriegelungselements 11 ein Rastelement 17 auf, das zur übersichtlicheren Darstellung nur in den Figuren 2 bis 4 mit einem Bezugszeichen versehen ist. Die weitere Ausgestaltung der Türverriegelung 9 ist in den Figuren 2 bis 4 dargestellt.

Vorzugsweise sind die mindestens zwei Verriegelungselemente 11 derart in dem Verkleidungselement 5 angeordnet, dass die mindestens zwei Verriegelungselemente 11 in Richtung des Türelements 7 nicht über das Verkleidungselement 5, insbesondere ein Seitenteil 5.1 des Verkleidungselements 5, hinausragen.

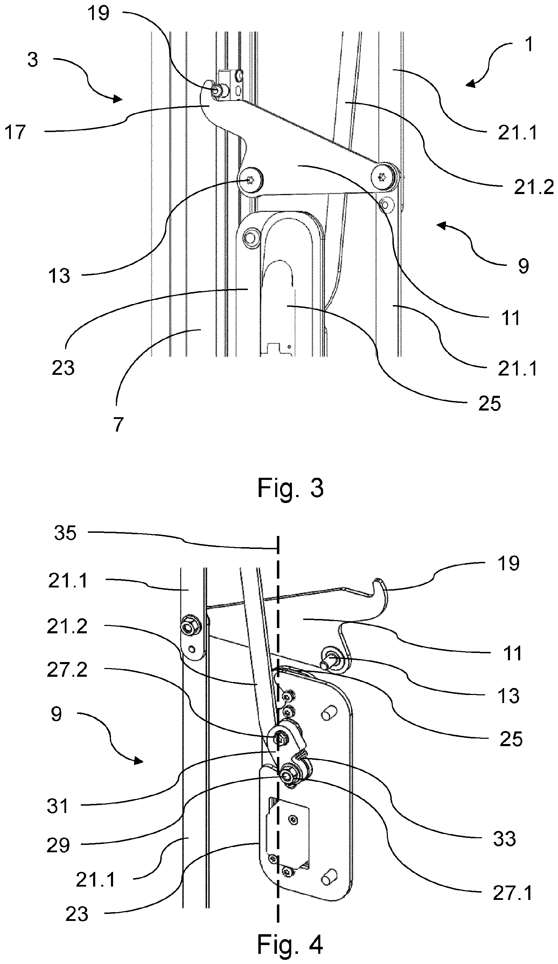

Weiterhin weist das Türelement 7 mindestens zwei Verriegelungsbolzen 19, insbesondere drei Verriegelungsbolzen 19, auf, wobei ein Verriegelungsbolzen 19 in Figur 3 dargestellt ist. Vorzugsweise sind die mindestens zwei Verriegelungsbolzen 19 in einem Rahmen des Türelements 7 angeordnet.

Die Verriegelungsbolzen 19 und die Verriegelungselemente 11 sind derart ausgebildet, dass jeweils ein Rastelement 17 mit jeweils einem Verriegelungsbolzen 19 in Eingriff kommen kann, um das Türelement 7 relativ zu dem Verkleidungselement 5 zu fixieren.

Vorzugsweise weist das mindestens eine Verkleidungselement 5 zusätzlich eine Türgriffvorrichtung 23 auf. Zusätzlich weist die Türgriffvorrichtung 23 vorzugsweise einen Türgriff 25 auf, wobei der Türgriff 25 verschwenkbar in der Türgriffvorrichtung 23 angeordnet ist.

**Figur 2** zeigt eine schematische Darstellung des Ausführungsbeispiels der Türverriegelung 9 aus Figur 1. Insbesondere ist in Figur 2 das Verkleidungselement 5 und das Türelement 7 ausgeblendet.

Gleiche und funktionsgleiche Elemente sind in allen Figuren mit denselben Bezugszeichen versehen, sodass insofern auf die vorangegangene Beschreibung verwiesen wird.

Zur übersichtlicheren Darstellung ist nur bei einem Verriegelungselement 11 ein Rastelement 17 mit einem Bezugszeichen versehen. Alle Verriegelungselemente 11 sind analog zueinander ausgebildet.

Weiterhin sind in Figur 2 die Verriegelungselemente 11, 11' sowohl in einer Freigabeposition, insbesondere gekennzeichnet mit den Bezugszeichen 11', und in einer Verriegelungsposition, insbesondere gekennzeichnet mit den Bezugszeichen 11, dargestellt.

Die mindestens zwei Verriegelungselemente 11, 11' sind über mindestens ein erstes starres Kupplungselement 21.1 mechanisch miteinander verbunden. Zusätzlich sind die mindestens zwei Verriegelungselemente 11, 11' jeweils zwischen einer Freigabeposition und einer Verriegelungsposition verlagerbar. In der Verriegelungsposition sind die mindestens zwei Verriegelungselemente 11 mittels des jeweiligen Rastelements 17 mit jeweils einem Verriegelungsbolzen 19 der mindestens zwei Verriegelungsbolzen 19 in Eingriff, sodass das Türelement 7 relativ zu dem Verkleidungselement 5 fixiert ist. In der Freigabeposition geben die mindestens zwei Verriegelungselemente 11' den jeweiligen Verriegelungsbolzen 19 frei, sodass das Türelement 7 relativ zu dem Verkleidungselement 5 verlagerbar ist.

Vorzugsweise sind mindestens eines der Verriegelungselemente 11, 11' und die Türgriffvorrichtung 23 über mindestens ein zweites starres Kupplungselement 21.2 mechanisch miteinander verbunden. Das mindestens eine erste Kupplungselement 21.1 und das mindestens eine zweite Kupplungselement 21.2 sind derart miteinander verbunden, dass eine Translation des mindestens einen zweiten Kupplungselements 21.2 eine Translation des mindestens einen ersten Kupplungselements 21.1 bewirkt.

Vorzugsweise ist das mindestens eine erste starre Kupplungselement 21.1 jeweils mit einem zweiten, dem ersten Ende 15.2 des jeweiligen Verriegelungselements 11, 11' gegenüberliegenden Ende 15.2 des jeweiligen Verriegelungselements 11, 11' verbunden. Dabei ist jeweils ein erster Abstand $d_1$ zwischen dem ersten Ende 15.1 des jeweiligen Verriegelungselements 11 und dem zugeordneten Befestigungselement 13 kleiner als ein zweiter Abstand $d_2$ zwischen dem zweiten Ende 15.2 des jeweiligen Verriegelungselements 11 und dem zugeordneten Befestigungselement 13.

Vorzugsweise ist der Türgriff 25 derart mit dem mindestens einen zweiten Kupplungselement 21.2 verbunden, dass ein Verschwenken des Türgriffs 25 eine Translation des mindestens einen zweiten Kupplungselements 21.2 bewirkt.

**Figur 3** zeigt eine schematische Darstellung einer Detailansicht des Ausführungsbeispiels der Ladestation 1, insbesondere des Gehäuses 3, aus Figur 1 und 2, wobei das Verkleidungselement 5 ausgeblendet ist.

In Figur 3 ist ein Verriegelungsbolzen 19 der mindestens zwei Verriegelungsbolzen 19 dargestellt.

Insbesondere sind in Figur 3 die mindestens zwei Verriegelungselemente 11 in der Verriegelungsposition dargestellt. Das dargestellte Verriegelungselement 11 ist mittels des Rastelements 17 mit dem zugehörigen Verriegelungsbolzen 19 in Eingriff, sodass das Türelement 7 relativ zu dem Verkleidungselement 5 fixiert ist.

Weiterhin ist insbesondere der Türgriff 25 in der Türgriffvorrichtung 23 arretiert.

**Figur 4** zeigt eine schematische Darstellung einer Detailansicht des Ausführungsbeispiels der Türverriegelung 9 aus den Figuren 1 bis 3. Insbesondere zeigt Figur 4 eine Rückansicht der Türverriegelung 9, wobei das Verriegelungselement 11 in der Verriegelungsposition und der Türgriff 25 in der Tür-Verriegelungsposition angeordnet ist.

Analog zu Figur 3 ist in Figur 4 das Verkleidungselement 5 ausgeblendet.

Das zweite starre Kupplungselement 21.2 ist mittels einer ersten Schraube 27.1 an einem Anlenkpunkt 29 mit einem Verbindungselement 31 der Türgriffvorrichtung 23 mechanisch verbunden. Weiterhin ist der Türgriff 25 mittels einer zweiten Schraube 27.2 mit dem Verbindungselement 31 verbunden.

Insbesondere liegt in der Verriegelungsposition der Verriegelungselemente 11 und in der Tür-Verriegelungsposition des Türgriffs 25 das Verbindungselement 31 an einem Vorsprung 33 an.

Dabei begrenzt der Vorsprung 33 eine Verlagerung des Verbindungselements 31 in einer Richtung.

Vorzugsweise ist das zweite Kupplungselement 21.2 derart an der Türgriffvorrichtung 23 befestigt, dass der Anlenkpunkt 29 des zweiten Kupplungselements 21.2 an der Türgriffvorrichtung 23 in einer Über-Totpunkt-Lage angeordnet ist, wenn der Türgriff 25 in der Tür-Verriegelungsposition angeordnet ist.

Insbesondere befindet sich der Anlenkpunkt 29 rechts von der gestrichelten Linie 35 in einer Über-Totpunkt-Lage.

## Patentansprüche

1. Gehäuse (3), insbesondere für eine Ladestation (1), mit mindestens einem Verkleidungselement (5) und einem Türelement (7), wobei

   - das mindestens eine Verkleidungselement (5) eine Türverriegelung (9) mit mindestens zwei Verriegelungselementen (11) aufweist, wobei
   - die mindestens zwei Verriegelungselemente (11) voneinander beabstandet und mittels jeweils eines Befestigungselements (13) um das jeweilige Befestigungselement (13) drehbar an dem mindestens einen Verkleidungselement (5) angeordnet sind, wobei
   - die mindestens zwei Verriegelungselemente (11) an einem ersten Ende (15.1) des jeweiligen Verriegelungselements (11) ein Rastelement (17) aufweisen, wobei
   - die mindestens zwei Verriegelungselemente (11) über mindestens ein erstes starres Kupplungselement (21.1) mechanisch miteinander verbunden sind, wobei
   - die mindestens zwei Verriegelungselemente (11) jeweils zwischen einer Freigabeposition und einer Verriegelungsposition verlagerbar sind, wobei
   - das Türelement (7) mindestens zwei Verriegelungsbolzen (19) aufweist, wobei
   - in der Verriegelungsposition die mindestens zwei Verriegelungselemente (11) mittels des jeweiligen Rastelements (17) mit jeweils einem Verriegelungsbolzen (19) der mindestens zwei Verriegelungsbolzen (19) in Eingriff sind, sodass das Türelement (7) relativ zu dem Verkleidungselemente (5) fixiert ist, und wobei

- in der Freigabeposition die mindestens zwei Verriegelungselemente (11) den jeweiligen Verriegelungsbolzen (19) freigeben, sodass das Türelement (7) relativ zu dem Verkleidungselement (5) verlagerbar ist.

2. Gehäuse (3) nach Anspruch 1, wobei das mindestens eine erste starre Kupplungselement (21.1) jeweils mit einem zweiten, dem ersten Ende (15.1) des jeweiligen Verriegelungselements (11) gegenüberliegenden Ende (15.2) des jeweiligen Verriegelungselements (11) verbunden ist, wobei jeweils ein erster Abstand ($d_1$) zwischen dem ersten Ende (15.1) des jeweiligen Verriegelungselements (11) und dem zugeordneten Befestigungselement (13) kleiner ist als ein zweiter Abstand ($d_2$) zwischen dem zweiten Ende (15.2) des jeweiligen Verriegelungselements (11) und dem zugeordneten Befestigungselement (13).

3. Gehäuse (3) nach einem der vorhergehenden Ansprüche, wobei

   - das mindestens eine Verkleidungselement (5) zusätzlich eine Türgriffvorrichtung (23) aufweist, wobei
   - mindestens eines der Verriegelungselemente (11) und die Türgriffvorrichtung (23) über mindestens ein zweites starres Kupplungselement (21.2) mechanisch miteinander verbunden sind, wobei
   - das mindestens eine erste Kupplungselement (21.1) und das mindestens eine zweite Kupplungselement (21.2) derart miteinander verbunden sind, dass eine Translation des mindestens einen zweiten Kupplungselements (21.2) eine Translation des mindestens einen ersten Kupplungselements (21.1) bewirkt.

4. Gehäuse (3) nach einem der vorhergehenden Ansprüche, wobei

   - die Türgriffvorrichtung (23) einen Türgriff (25) aufweist, wobei
   - der Türgriff (25) verschwenkbar in der Türgriffvorrichtung (23) angeordnet ist, wobei
   - der Türgriff (25) derart mit dem mindestens einen zweiten Kupplungselement (21.2) verbunden ist, dass ein Verschwenken des Türgriffs (25) eine Translation des mindestens einen zweiten Kupplungselements (21.2) bewirkt.

5. Gehäuse (3) nach einem der vorhergehenden Ansprüche, wobei der Türgriff (25) zwischen einer Tür-Freigabeposition und einer Tür-Verriegelungsposition verlagerbar ist, wobei bei einem Verschwenken des Türgriffs (25) von der Tür-Verriegelungsposition in die Tür-Freigabeposition die mindestens zwei Verriegelungselemente (11) jeweils von der Verriegelungsposition in die Freigabeposition gedreht werden.

6. Gehäuse (3) nach einem der vorhergehenden Ansprüche, wobei das zweite Kupplungselement (21.2) derart an der Türgriffvorrichtung (23) befestigt ist, dass ein Anlenkpunkt (29) des zweiten Kupplungselements (21.2) an der Türgriffvorrichtung (23) in einer Über-Totpunkt-Lage angeordnet ist, wenn der Türgriff (25) in der Tür-Verriegelungsposition angeordnet ist.

7. Ladestation (1) mit einem Gehäuse (3) nach einem der vorhergehenden Ansprüche.

Fig. 1

Fig. 2

Fig. 3

Fig. 4

Europäisches
Patentamt

European
Patent Office

Office européen
des brevets

# EUROPÄISCHER RECHERCHENBERICHT

**Nummer der Anmeldung**

**EP 23 21 1614**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 750 569 A (FLOGAUS WILLIAM S [US]) 14. Juni 1988 (1988-06-14) * das ganze Dokument * ----- | 1-7 | INV. E05B17/00 B60L53/31 E05B63/00 E05B65/00 E05C9/02 E05C9/16 E05C9/18 |
| X | DE 93 19 770 U1 (OLIVO S A [FR]) 21. April 1994 (1994-04-21) * das ganze Dokument * ----- | 1 | |
| A | CH 671 263 A5 (CHRISTIAN ANDEREGG) 15. August 1989 (1989-08-15) * Abbildungen 1-3 * ----- | 1 | |
| A | US 4 610 472 A (BILLINGSLEY MICHAEL J [US]) 9. September 1986 (1986-09-09) * Abbildungen 1-5 * ----- | 1 | |

**RECHERCHIERTE SACHGEBIETE (IPC)**

E05B
B60L
E05C

Der vorliegende Recherchenbericht wurde für alle Patentansprüche erstellt

| Recherchenort | Abschlußdatum der Recherche | Prüfer |
|---|---|---|
| Den Haag | 18. März 2024 | Ansel, Yannick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 23 21 1614**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**18-03-2024**

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 4750569 | A | 14-06-1988 | KEINE | | | |
| DE 9319770 | U1 | 21-04-1994 | DE | 9319770 | U1 | 21-04-1994 |
| | | | ES | 1026645 | U | 16-05-1994 |
| | | | FR | 2699514 | A1 | 24-06-1994 |
| | | | IT | TO930274 | U1 | 21-06-1995 |
| CH 671263 | A5 | 15-08-1989 | KEINE | | | |
| US 4610472 | A | 09-09-1986 | JP | H0259264 | B2 | 12-12-1990 |
| | | | JP | S5996372 | A | 02-06-1984 |
| | | | US | 4610472 | A | 09-09-1986 |

Für nähere Einzelheiten zu diesem Anhang : siehe Amtsblatt des Europäischen Patentamts, Nr.12/82

EPO FORM P0461